# EUROPEAN PATENT APPLICATION

(11) **EP 1 283 568 A1**
(43) Date of publication of application: **12.02.2003**
(21) Application number: 01921970.8
(22) Date of filing: 20.04.2001
(51) Int. Cl.: H01S 3/095, H01S 3/22

(54) **HIGH-FREQUENCY DISCHARGE EXCITED OXYGEN GENERATOR FOR IODINE LASER AND HIGH-FREQUENCY DISCHARGE EXCITED OXYGEN GENERATING METHOD**

(30) Priority: 21.04.2000 JP 2000121846
(71) Applicant: Fujisaki Electric Co. Ltd, Anan-shi, Tokushima 774-0001 (JP)
(72) Inventor: FUJII, Hiroo, Godosyukushaananjyutaku, Anan-shi, Tokushima 774-0017 (JP); SCHMIEDBERGER, Josef, 130 00 Praha 3 (CZ); OKAMURA, Minoru, c/o Fujisaki Electric Co, Ltd., Anan-shi, Tokushima 774-0001 (JP); YOSHITANI, Eiji, c/o Fujisaki Electric Co, Ltd., Anan-shi, Tokushima 774-0001 (JP)
(74) Representative: Menges, Rolf, Dipl.-Ing.
(86) International application number: JP0103422
(87) International publication number: WO01082425

(57) **Abstract**

A high-frequency discharge excited oxygen generator comprises: a hollow cathode 2 having a plasma channel 3 opened; an anode 4 insulated from the hollow cathode 2 and disposed on an exhaust side of this hollow cathode 2; and a high-frequency power supply 5 for supplying a high-frequency power between this anode 4 and the hollow cathode 2. The excited oxygen generator supplies the plasma channel 3 of the hollow cathode 2 with O₂ gas or a mixed gas, in which O₂ gas and another gas are mixed, and produces singlet excited oxygen. Further, the excited oxygen generator comprises an injector 10 for supplying NO gas toward the center of the plasma channel 3 disposed on the supply side of the plasma channel 3. The NO gas supplied to the central portion of the plasma channel 3 is not dissociated into nitrogen and oxygen and excites O₂ gas to excited oxygen.

## Description

### Technical Field .

The invention relates to an apparatus for generating excited oxygen to be primarily supplied to an iodine laser apparatus and its method, and more particularly, to a high-frequency discharge excited oxygen generating apparatus.

### Background Art

The iodine laser has good quality of light and it can be guided by fiber optics well, so that its use as an industrial laser may be expected.

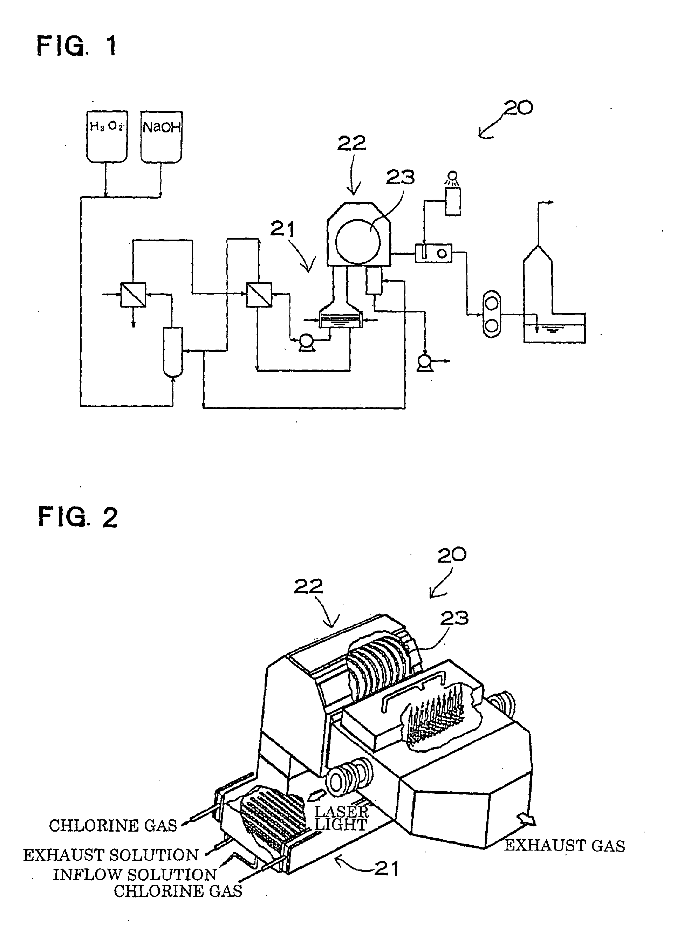

In the past, an iodine laser has been emitted by aniodine laser apparatus 20 having a chemical excited oxygen generator 21 shown in Fig. 1 and Fig. 2. As shown in Fig. 1 and Fig. 2, in this'chemical excited oxygen generating apparatus 21, sodium hydroxide solution is added to oxygenated water and the mixture solution is bubbled with chlorine gas, thereby producing singlet excited oxygen (O₂(1Δ))(which can be hereinafter referred to as excited oxygen simply). The produced excited oxygen contains moisture because this produced excited oxygen is produced by a wet process. For this reason, a moisture trap 22 is provided to remove the moisture in the excited oxygen.

As shown in Fig. 2 in outline, this moisture trap 22 freezes the vapor contained in the excited oxygen to a rotating disk 23, and scrape the frozen vapor therefrom with a scraper (not shown) thereby to remove the vapor. Therefore, this moisture trap 22 is provided with a number of rotating disks 23 inside. As a result, this moisture trap 22 is upsized and considerable amounts of energy are consumed in the energy involved in cooling the rotating disks 23 as well as the energy involved in rotating themselves. Therefore, the costs of facilities and operating expenses are increased justifiably. Further, chlorine gas, oxygenated water and an aqueous solution of sodium hydroxide, which are used as raw materials, are also expensive, which also increases the operating expenses.

On top of this, the aqueous solution subjected to the bubbling with chlorine gas used to produce excited oxygen produces NaCl by a chemical reaction and it requires a waste solution processing system to circulate and to use unreacted oxygenated water and aqueous solution of sodium hydroxide. Also, excessive chlorine gas in bubbling of chlorine gas as well as hydrogen chloride gas produced as a by-product during the bubbling process are noxious gases, so that their exhaust gas processing system is required. The needs for these various processing systems also foster the upsizing of the iodine laser apparatus 20 having this chemical excited oxygen generator 21 and an increase in cost.

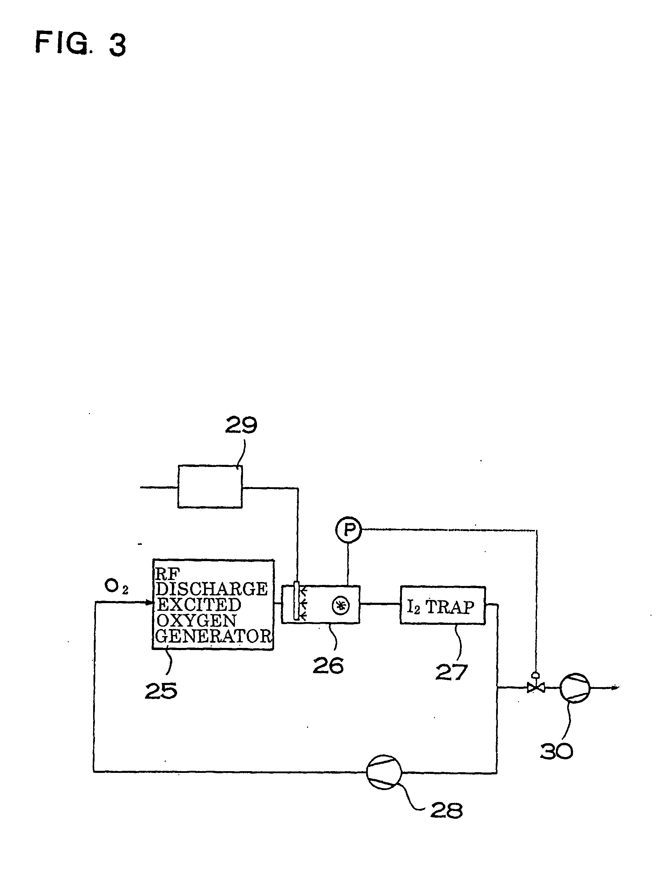

Thus, the iodine laser apparatus having a chemical excited oxygen generator has such problems, so the inventors have been developed an iodine laser apparatus having a so-called dry-type RF discharge excited oxygen generator without a chemical excited oxygen generator (Japanese Patent Laid-Open No. 254738/1995). Fig. 3 shows this iodine laser apparatus.

In RF discharge, the RF discharge excited oxygen generator 2 5 shown in this drawing properly selects a form of hollow cathode and properly selects a flow speed of oxygen gas passing through the hollow cathode, a pressure inside the hollow, an applied power, and the like to perform RF discharge, whereby excited oxygen is produced in an after-glow plasma layer between unionized neutral oxygen and a glow portion.

The singlet excited oxygen produced in this RF discharge excited oxygen generator 25 transfers its energy to iodine atoms in a laser oscillator 26 to emit a laser. This iodine laser apparatus comprises the RF discharge excited oxygen generator 25, the laser oscillator 26 provided downstream of this RF discharge excited oxygen generator 25, an iodine trap 27 provided downstream of the laser oscillator 26, a gas circulating blower 28 provided downstream of the iodine trap 27, an iodine vaporizer 29 for supplying iodine atoms to said laser oscillator 26, and a vacuum pump 30 for maintaining a constant vacuum pressure inside the laser oscillator 26. The RF discharge excited oxygen generator 25 produces singlet excited oxygen and the laser oscillator 26 transfers the energy of said singlet excited oxygen to the iodine atoms from the iodine vaporizer 29 to emit a laser.

The inventors have manufactured an iodine laser apparatus comprising the above RF discharge excited oxygen generator experimentally. However, the iodine laser apparatus comprising the RF discharge excited oxygen generator shown in the drawing could not emit an iodine laser actually. It is because the RF discharge excited oxygen generator could not produce singlet excited oxygen efficiently.

The invention has been developed for the purpose of generating excited oxygen efficiently to emit an iodine laser; therefore an important object of the invention is to provide a high-frequency discharge excited oxygen generator for an iodine laser capable of generating excited oxygen efficiently.

### Disclosure of the Invention

A high-frequency discharge excited oxygen generator for iodine lasers of the invention comprises: a hollow cathode 2 having a plasma channel 3 opened; an anode 4 insulated from the hollow cathode 2 and disposed on an exhaust side of the plasma channel 3 penetrating this hollow cathode 2; and a high-frequency power supply 5 for supplying a high-frequency power between this anode 4 and the hollow cathode 2. This excited oxygen generator supplies O₂ gas or a mixed gas in which O₂ gas and another gas are mixed to the plasma channel 3 of the hollow cathode 2 to produce singlet excited oxygen.

Further, in the high-frequency discharge excited oxygen generator, an injector 10 for supplying NO gas towards a center of the plasma channel 3 is disposed on a supply side of the plasma channel 3 of the hollow cathode 2. The injector 10 supplies NO gas to the central portion of the plasma channel 3. The NO gas supplied here is efficiently excited without being dissociated into nitrogen and oxygen in the plasma channel 3 to excite O₂ gas into excited oxygen with its energy.

The high-frequency discharge excited oxygen generator supplies N₂ gas, NO gas, and O₂ gas to the plasma channel 3 of the injector 10 to excite O₂ gas into excited oxygen with N₂ gas and NO gas. The excited oxygen generator supplies not N₂ gas but NO gas to the center of the plasma channel 3 because the dissociation energy of NO gas is smaller than that of N₂ gas and the former gas is easy to dissociate. The dissociation energy of NO gas is 6.479eV, and the dissociation energy of N₂ gas is 9.760eV. When NO gas having smaller dissociation energy is dissociated, it is turned into nitrogen and oxygen, and therefore it becomes impossible to change O₂ gas into excited oxygen.

The generator supplies NO gas that is apt to be dissociated to the central portion of the plasma channel 3 through the injector 10. The central portion of the plasma channel 3 has a lower electron density, so that the probability that the gas is excited by electrons and dissociated is low. On this account, NO gas supplied hereto can excite O₂ gas into excited oxygen without being dissociated.

N₂ gas has a large dissociation energy, so that the probability that N₂ gas is dissociated is low even when it passes through a high electron density region of the plasma channel 3. Further, even if N₂ gas is dissociated, it is turned into nitrogen and therefore results in N₂ gas, which can excite O₂ gas. On this account, supplying not N₂ gas but NO gas having a smaller dissociation energy to the center of the plasma channel 3 allows both N₂ gas and NO gas to excite O₂ gas into excited oxygen.

The injector 10 has preferably such a conical shape that it narrows and becomes thinner towards the plasma channel 3 of the hollow cathode 2 and it can efficiently throttle NO gas to supply it to the central portion of the plasma channel 3. In addition, the injector 10 may be made of aluminum.

Further, in the high-frequency discharge excited oxygen generator of the invention, the anode 4 is tubular in shape, and this tubular anode 4 may have an injector bore 11 opened penetrating from an outside to inside thereof. The injector bore 11 can inject NO₂ gas inside the anode 4. The high-frequency discharge excited oxygen generator 1 generates O by providing oxygen with energy equal to or more than its dissociation energy of 5.116V through discharge in the plasma channel 3. The generated O here generates ozone, thereby reducing the generation efficiency of excited oxygen.

NO₂ gas injected inside the anode 4 from the injector bore 11 removes O generated inside the anode 4 according to the following equation:

O + NO₂ --> NO + O₂

Also, the injector bore 11 opened in the tubular anode 4 can inject an inert cooling gas inside the anode 4 to cool the plasma jet 8 and to generate excited oxygen efficiently. As the inert cooling gas may be used argon, helium, N₂ gas and the like.

Further, the high-frequency discharge excited oxygen generator of the invention can apply a magnetic field in a direction of plasma jet 8 produced inside of the anode 4. As for the magnetic field, for example, an excitation coil 12 is disposed outside the anode 4 to energize this excitation coil 12 or a permanent magnet 13 is disposed outside the anode 4, whereby the magnetic field can be applied inside the anode 4. A magnetic field in a direction of plasma jet 8 provides a charged particle with a centripetal force due to a Lorentz force thereby to narrow the plasma jet 8, to improve the energy efficiency, and to generate excited oxygen more efficiently.

Further, a high-frequency discharge excited oxygen generating method of the invention comprises the steps of: supplying a high-frequency power between a hollow cathode 2 with a plasma channel 3 opened and an anode 4 insulated from the hollow cathode 2 and disposed on an exhaust side of the plasma channel 3 penetrating the hollow cathode 2; and supplying the plasma channel 3 of the hollow cathode 2 with O₂ gas or a mixed gas in which O₂ gas and another gas are mixed to produce singlet excited oxygen. The high-frequency discharge excited oxygen generating method of the invention further comprises the step of supplying NO gas to the center of the plasma channel 3 on a supply side of the plasma channel 3 of the hollow cathode 2.

The high-frequency discharge excited oxygen generating method of the invention preferably comprises the steps of supplying NO gas to the central portion of the plasma channel 3 of the hollow cathode 2 and supplying a gas containing O₂ gas to surroundings of the plasma channel 3.

Further, the high-frequency discharge excited oxygen generating method of the invention allows NO₂ gas to be injected inside the anode 4. Also, the high-frequency discharge excited oxygen generating method of the invention allows an inert cooling gas to be injected inside the anode 4, whereby the plasma jet 8 can be cooled. Further, the high-frequency discharge excited oxygen generating method of the invention also allows a magnetic field to be applied in a direction of plasma jet 8 produced inside the anode 4.

### Brief Description of the Drawings

Fig. 1 is a schematic block diagram of an iodine laser apparatus having a conventional chemical excited oxygen generator.
Fig. 2 is a perspective view of the iodine laser apparatus shown in Fig. 1.
Fig. 3 is a schematic block diagram of an iodine laser apparatus which the inventors have developed before.
Fig. 4 is a schematic cross-sectional view of a high-frequency discharge excited oxygen generator of a first embodiment of the invention.
Fig. 5 is a schematic cross-sectional view of a high-frequency discharge excited oxygen generator of a second embodiment of the invention.
Fig. 6 is a schematic cross-sectional view of a high-frequency discharge excited oxygen generator of a third embodiment of the invention.
Fig. 7 is a schematic cross-sectional view of a high-frequency discharge excited oxygen generator of a fourth embodiment of the invention.
Fig. 8 is a schematic cross-sectional view of a high-frequency discharge excited oxygen generator of a fifth embodiment of the invention.

### Best Mode for Carrying Out the Invention

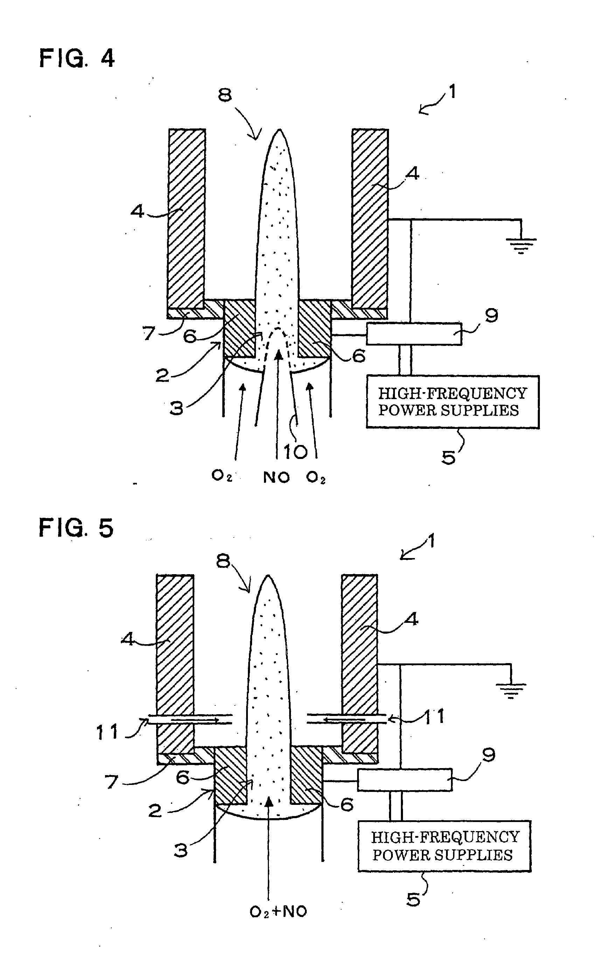

The high-frequency discharge excited oxygen generators 1 shown in Fig. 4 to Fig. 6 each comprise a hollow cathode 2 having a plasma channel 3 opened in a center thereof, an anode 4 insulated from the hollow cathode 2 and disposed on the exhaust side of the plasma channel 3 penetrating this hollow cathode 2, and a high-frequency power supply 5 for supplying between this anode 4 and the hollow cathode 2 with a high-frequency power. This high-frequency discharge excited oxygen generator 1 supplies the plasma channel 3 of the hollow cathode 2 with O₂ gas or a mixed gas in which O₂ gas and the other gases are mixed, thereby to produce singlet excited oxygen. The singlet excited oxygen is supplied to an iodine laser oscillator to emit an iodine laser emission.

The hollow cathode 2 made of aluminum is cylindrical in shape generally, and is provided with a thick obturator portion 6 at one tip thereof and with the plasma channel 3 opened penetrating the center of this obturator portion 6. Because the hollow cathode 2 undergoes high frequency discharge with respect to the anode 4, it is made of metal having electrical conductivity. The aluminum hollow cathode 2 can generate excited oxygen efficiently. It is because even when excited oxygen contacts with aluminum, the oxygen can be kept in excited states.

The obturator portion 6 has a thickness of about 4mm and the inside diameter of the plasma channel 3 is about 3mm. In the generator of the invention, however, the thickness of obturator portion 6 of the hollow cathode 2 and the size of the plasma channel 3 are not specified. For example, the thickness of the obturator portion may be 2-30mm, and preferably 3-20mm, and the inside diameter of the plasma channel may be 1.5-20mm, and preferably 2-10mm.

Also, the anode 4 is made of aluminum for the same reason as in the case of the hollow cathode 2. The anode 4 is secured to the hollow cathode 2 through an insulating material 7. The anode 4 in the drawing is cylindrical in shape and disposed coaxially with respect to the plasma channel 3 of the hollow cathode 2. The anode 4 in the drawing is obturated at its lower endwith the insulating material 7 hermetically. The insulating material 7 is hermetically connected to the upper end of the hollow cathode 2 to secure the anode 4 to the hollow cathode 2. The insulating material 7 may be made of ceramics or heat-resistant plastics.

The anode 4 has an inside diameter larger than that of the plasma channel 3 and has such a shape that a plasma jet 8 can be injected from the plasma channel 3 towards the inside, as shown in the drawing. The plasma jet 8 injected from anode 4 excites O₂ gas to generate singlet excited oxygen. The singlet excited oxygen is supplied to the iodine laser oscillator to emit an iodine laser emission. Therefore, a tip opening of the anode 4 is connected to the iodine laser oscillator.

The high-frequency power supply 5 supplies high-frequency powers to the anode 4 and the hollow cathode 2 through a matching circuit 9. The frequency of this high-frequency power supply 5 is preferably 1MH-500MHz, preferably 5MHz-300MHz, and more preferably 10MHz-100MHz. The output of the high-frequency power supply 5 is about 100W. However, because the optimum output of the high-frequency power supply changes depending on the shapes of the hollow cathode and anode and a generated amount of excited oxygen, the output of the high-frequency power supply may be increased in the case of increasing a generated amount of excited oxygen or in the case of making the hollow cathode or anode larger. The high-frequency power supply 5 is connected to the matching circuit 9 at its output side to transmit an output to the hollow cathode 2 and the anode 4 efficiently. The matching circuit 9 matches the output impedance of the high-frequency power supply 5 and the impedances of the hollow cathode 2 and the anode 4 to supply high-frequency powers to the hollow cathode 2 and the anode 4 efficiently.

Further, the hollow cathode 2 shown in Fig. 4 has an injector 10, which supplies NO gas towards the center of the plasma channel 3, disposed on the supply side of the plasma channel 3, namely below the plasma jet 8 in the drawing. The injector 10 is made of aluminum. The injector 10 in the drawing has such a conical shape that it gradually narrows and becomes thinner towards the plasma channel 3 of the hollow cathode 2. However, it is not necessarily required to form the injector in conical shape, it may take on any shape which allows NO gas to be supplied to the center of the plasma channel. For example, it may be of such an exponential horn shape that it becomes thinner gradually towards its tip.

The injector 10 in the drawing has a tip opening with a size narrower than the inside diameter of the plasma channel 3 to supply NO gas to the central portion of the plasma channel 3. As for the injector 10, an area of the tip opening is preferably 10-50% of an opening area of the plasma channel 3, more preferably 10-40% thereof, and most preferably about 25% thereof. In addition, the tip of the injector 10 is located close to the opening of the plasma channel 3 or inserted from the opening of the plasma channel 3 into the inside thereof.

The high-frequency discharge excited oxygen generator 1 in this drawing has the hollow cathode 2 supplied from a gas supplying source (not shown) with O₂ gas or a mixed gas of O₂ gas and N₂ gas at its lower end opening, and has the injector 10 supplied from an NO gas supplying source (not shown) with NO gas. The supplied NO gas is supplied to the central portion of the plasma channel 3 and the O₂ gas or the mixed gas of O₂ gas and N₂ gas is supplied to its outside. The gas to be supplied to the plasma channel 3 is spouted from the plasma channel 3 inside the anode 4.

Under this condition, when a high-frequency power is supplied by the high-frequency power supply 5, high-frequency 5 discharge takes place and a plasma jet 8 is formed in a region. shown with a broken line in the drawing. The plasma jet 8 is formed in such shape that it is injected from the plasma channel 3 towards the center of the anode 4. At this time, the energy transfer from electrons to oxygen molecules takes place, whereby singlet excited oxygen is produced. The high-frequency discharge excited oxygen generator 1 draws out the singlet excited oxygen produced in the plasma jet 8 to supply it to the iodine laser.

In the embodiment of Fig. 4, an inside diameter of the plasma channel 3 is 3mm, a thickness of the obturator portion 6 is 4mm, a flow rate of O₂ gas is 200sccm, a flow rate of NO gas is 40sccm, a pressure of mixed gas to be supplied to the hollow cathode 2 is 50Torr, a pressure inside the anode 4 is 0.5Torr, an output of the high-frequency power supply 5 is 200W, and a frequency of the high-frequency power supply 5 is 100MHz, whereby singlet excited oxygen can be achieved efficiently, provided that sccm, which indicates a flow rate, expresses a flow rate per minute in cc at 15°C(degrees centigrade) and at 750torr. In the case of supplying the plasma channel with N₂ gas in addition to O₂ gas, a flow rate of N₂ gas is 1sccm.

In the high-frequency discharge excited oxygen generator 1 shown in Fig. 5, an injector bore 11 is opened penetrating the tubular anode 4 from the outside to inside. The injector bore 11 opens in a lower portion of the anode 4, i.e. in a location close to the opening of the plasma channel 3 in the drawing. In addition, the injector bore 11 in the drawing opens so as to penetrate the anode 4 radially. There are provided one or more such injector bores 11.

From the injector bore 11 is injected NO₂ gas and/or an inert cooling gas inside the anode 4. The injector bore 11 preferably injects both the NO₂ gas and inert cooling gas inside the anode 4. The anode 4, which injects both the NO₂ gas and inert cooling gas, has more than one injector bore 11 opened therein to inject NO₂ gas and the inert cooling gas separately. However, the injector bore can also mix and inject NO₂ gas and inert cooling gas.

NO₂ gas injected inside the anode 4 from the injector bore 11 can remove O, which is generated inside the anode 4. When O is generated inside the anode 4, this becomes ozone, reducing the production efficiency of excited oxygen. When NO₂ gas removes O, an amount of ozone is decreased, whereby excited oxygen can be produced efficiently.

Further, the inert cooling gas injected inside the anode 4 from the injector bore 11 cools the inside of the anode 4 and generates excited oxygen efficiently. Therefore, the structure in which an inert cooling gas is injected can also produce excited oxygen efficiently. As the inert cooling gas, argon is used. However, helium, N₂ gas, and the like can be also used as this gas.

The injector bore 11 is connected to a gas source, which is not shown, to inject NO₂ gas and an inert cooling gas inside the anode 4. The high-frequency discharge excited oxygen generator 1 in this drawing makes a flow rate of the flow rate of NO2 gas preferably 20sccm, and makes a flow rate of inert cooling gas preferably 40sccm.

The high-frequency discharge excited oxygen generator 1 in Fig. 5 has no injector, so that the plasma channel 3 of the hollow cathode 2 is supplied with a mixed gas of O₂ gas and NO gas. However, the hollow cathode can be supplied with a gas for addition of N₂ gas in addition to O₂ gas and NO gas. In this generator, an inside diameter of the plasma channel 3 is 3mm, a thickness of the obturator portion 6 is 4mm, a flow rate of O₂ gas is 200sccm, a flow rate of NO gas is 40sccm, a flow rate of NO₂ gas injected from the injector bore 11 is 20sccm, a pressure of mixed gas supplied to the hollow cathode 2 is 50Torr, a pressure inside the anode 4 is 0.5Torr, an output of the high-frequency power supply 5 is 200W, and a frequency of the high-frequency power supply 5 is 100MHz, whereby singlet excited oxygen can be achieved efficiently. When N₂ gas is supplied to the hollow cathode 2, the flow rate is 1sccm.

In addition, it has the same settings as the foregoing except that a gas injected from the injector bore 11 towards the plasma jet 8 is changed from NO₂ gas to an inert cooling gas such as argon and helium gas, and its injected flow rate is 40sccm, whereby singlet excited oxygen can be generated efficiently. Further, even when the gases injected from the injector bore 11 towards plasma jet 8 are NO₂ gas having a flow rate of 10sccm and an inert cooling gas having a flow rate of 20sccm, singlet excited oxygen can be generated efficiently.

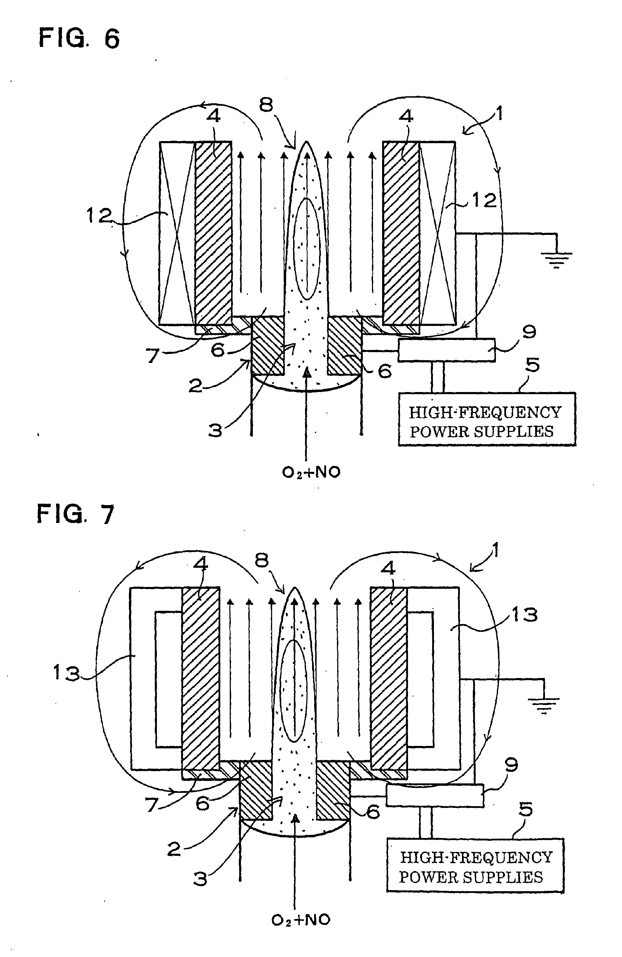

Further, the high-frequency discharge excited oxygen generator 1 shown in Fig. 6 has an excitation coil 12 disposed outside the anode 4 to apply a magnetic field inside the anode 4. The direction in which the magnetic field is applied is a direction in which a plasma jet 8 is injected as shown by an arrow in the drawing. The strength of the magnetic field inside the anode 4 is preferably 10000gauss. Incidentally, the magnetic field inside the anode may be 1000-50000gauss. The magnetic field narrows the plasma jet 8 to improve the energy efficiency and to generate excited oxygen more efficiently, so that making it stronger can cause the plasma jet 8 to converge more effectively.

In the structure of applying a magnetic field by the excitation coil 12, the strength of the magnetic field can be controlled by a current flowed through the excitation coil 12 and the number of turns in the coil. Also a high-frequency discharge excited oxygen generator of the invention can apply a magnetic field to the plasma jet 8 using permanent magnets 13 as shown in Fig. 7. This structure allows the plasma jet 8 to be applied with a magnetic field without consuming a power.

5 The high-frequency discharge excited oxygen generator 1 in Fig. 6 has no injector, so that the hollow cathode 2 is supplied with a mixed gas of O₂ gas and NO gas. However, the hollow cathode may be supplied with a mixed gas of NO gas and N₂ gas. Further, because this generator has also no injector bore, neither NO₂ gas nor inert cooling gas is supplied from the injector bore. In this generator, an inside diameter of the plasma channel 3 is 3mm, a thickness of the obturator portion 6 is 4mm, a flow rate of O₂ gas is 200sccm, a flow rate of NO gas is 40sccm, a pressure of a mixed gas supplied to the hollow cathode 2 is 50Torr, a pressure inside the anode 4 is 0.5Torr, an output of the high-frequency power supply 5 is 200W, a frequency of the high-frequency power supply 5 is 100MHz, and a magnetic field inside the anode 4 is 10000gauss, whereby singlet excited oxygen can be achieved efficiently. When the hollow cathode 2 is supplied with N₂ gas, its flow rate is 1sccm.

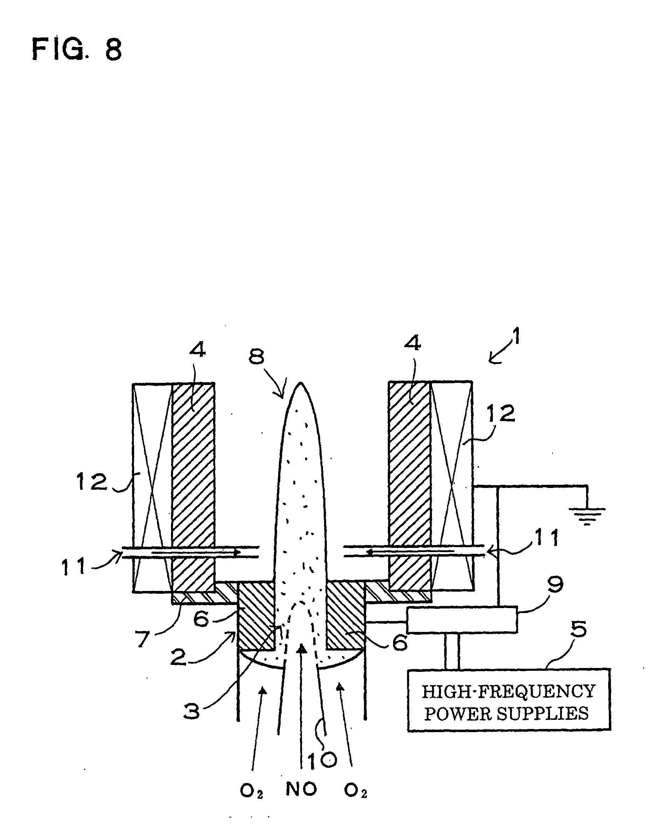

The high-frequency discharge excited oxygen generators 1 shown in Fig. 4 to Fig. 6 each can produce excited oxygen efficiently by having an injector provided therein, having an injector bore therein, or having the anode applied with a magnetic field. Therefore, such a high-frequency discharge excited oxygen generator 1 that an injector 10 and an injector bore 11 is provided and a magnetic field is applied to an anode 4 as shown in Fig. 8 can produce excited oxygen most efficiently.

### Industrial Applicability

In a high-frequency discharge excited oxygen generator of the invention and the high-frequency discharge excited oxygen generating method, NO gas is supplied to the center of a plasma channel, so that it is possible to prevent the dissociation of NO gas and to produce excited oxygen efficiently. Therefore, the generator can be utilized as an industrial laser.

The subject of the invention for injecting NO₂ gas inside the anode 4 allows NO₂ gas to remove O generated inside the anode to prevent such O from becoming ozone effectively, thereby to block ozone from reducing the generation efficiency of excited oxygen effectively. Especially, the subject in which an injector bore is opened in the anode and from this injector bore NO₂ gas is injected inside the anode, can supply NO₂ gas to the inside of the anode efficiently to prevent the generation of ozone effectively.

Furthermore, the subject relating to the invention which injects an inert cooling gas inside the anode to cool the plasma jet allows excited oxygen to be produced efficiently. Especially, the subject in which an injector bore is opened in a tubular anode and an inert cooling gas such as argon is injected from this injector bore allows a cooling gas to be efficiently supplied inside the anode thereby to cool there effectively.

The subject relating to the invention which applies a magnetic field in a direction of plasma jet of the anode allows the magnetic field to narrow the plasma jet to improve the energy efficiency, whereby producing excited oxygen more efficiently.

## Claims

1. A high-frequency discharge excited oxygen generator for iodine lasers **characterized by** comprising: a hollow cathode (2) having a plasma channel (3) opened; an anode (4) insulated from the hollow cathode (2) and disposed on an exhaust side of the plasma channel (3) penetrating this hollow cathode (2); and a high-frequency power supply (5) for supplying a high-frequency power between this anode (4) and the hollow cathode (2), the high-frequency discharge excited oxygen generator supplying O₂ gas or a mixed gas in which O₂ gas and another gas are mixed to the plasma channel (3) of the hollow cathode (2) to produce singlet excited oxygen,
wherein an injector (10) for supplying NO gas towards a center of the plasma channel (3) is disposed on a supply side of the plasma channel (3) of the hollow cathode (2).

2. The high-frequency discharge excited oxygen generator for iodine lasers according to claim 1, wherein NO gas is supplied to the central portion of the plasma channel (3) of the hollow cathode (2) through the injector (10) and O₂ gas is supplied to the plasma channel (3) from outside the injector (10).

3. The high-frequency discharge excited oxygen generator for iodine lasers according to claim 1, the injector (10) has such a conical shape that it narrows and becomes thinner towards the plasma channel (3) of the hollow cathode (2).

4. The high-frequency discharge excited oxygen generator for iodine lasers according to claim 1, the injector (10) is of aluminum.

5. A high-frequency discharge excited oxygen generator for iodine lasers **characterized by** comprising: a hollow cathode (2) having a plasma channel (3) opened; an anode (4) insulated from the hollow cathode (2) and disposed on an exhaust side of the plasma channel (3) penetrating this hollow cathode (2); and a high-frequency power supply (5) for supplying a high-frequency power between this anode (4) and the hollow cathode (2), the high-frequency discharge excited oxygen generator supplying O₂ gas or a mixed gas in which O₂ gas and another gas are mixed to the plasma channel (3) of the hollow cathode (2) to produce singlet excited oxygen,
wherein the anode (4) is tubular in shape, this anode (4) has an injector bore (11) opened penetrating from an outside to inside thereof, and NO₂ gas is injected from the injector bore (11) inside the anode (4).

6. A high-frequency discharge excited oxygen generator for iodine lasers **characterized by** comprising: a hollow cathode (2) having a plasma channel (3) opened; an anode (4) insulated from the hollow cathode (2) and disposed on an exhaust side of the plasma channel (3) penetrating this hollow cathode (2); and a high-frequency power supply (5) for supplying a high-frequency power between this anode (4) and the hollow cathode (2), the high-frequency discharge excited oxygen generator supplying O₂ gas or a mixed gas in which O₂ gas and another gas are mixed to the plasma channel (3) of the hollow cathode (2) to produce singlet excited oxygen,
wherein the anode (4) is tubular in shape, this anode (4) has an injector bore (11) opened penetrating from an outside to inside thereof, and an inert cooling gas is injected from the injector bore (11) inside the anode (4).

7. A high-frequency discharge excited oxygen generator for iodine lasers **characterized by** comprising: a hollow cathode (2) having a plasma channel (3) opened; an anode (4) insulated from the hollow cathode (2) and disposed on an exhaust side of the plasma channel (3) penetrating this hollow cathode (2); and a high-frequency power supply (5) for supplying a high-frequency power between this anode (4) and the hollow cathode (2), the high-frequency discharge excited oxygen generator supplying O₂ gas or a mixed gas in which, O₂ gas and another gas are mixed to the plasma channel (3) of the hollow cathode (2) to produce singlet excited oxygen,
wherein in a direction of a plasma jet (8) produced inside the anode (4) is applied a magnetic field.

8. The high-frequency discharge excited oxygen generator for iodine lasers according to claim 7, wherein an excitation coil (12) or a permanent magnet (13) is disposed outside the anode (4) thereby to apply a magnetic field inside the anode (4).

9. A high-frequency discharge excited oxygen generating method for iodine lasers **characterized by** comprising the steps of: supplying a high-frequency power between a hollow cathode (2) with a plasma channel (3) opened and an anode (4) insulated from the hollow cathode (2) and disposed on an exhaust side of the plasma channel (3) penetrating the hollow cathode (2); and supplying the plasma channel (3) of the hollow cathode (2) with O₂ gas or a mixed gas in which O₂ gas and another gas are mixed to produce singlet excited oxygen,
the high-frequency discharge excited oxygen generating method for iodine lasers further comprising the step of supplying NO gas to a center of the plasma channel (3) on a supply side of the plasma channel (3) of the hollow cathode (2).

10. The high-frequency discharge excited oxygen generating method for iodine lasers according to claim 9, further comprising the steps of: supplying NO gas to the central portion of the plasma channel (3) of the hollow cathode (2); and supplying a gas containing O₂ gas to surroundings of the plasma channel (3).

11. A high-frequency discharge excited oxygen generating method for iodine lasers **characterized by** comprising the steps of: supplying a high-frequency power between a hollow cathode (2) with a plasma channel (3) opened and an anode (4) insulated from the hollow cathode (2) and disposed on an exhaust side of the plasma channel (3) penetrating the hollow cathode (2); and supplying the plasma channel (3) of the hollow cathode (2) with O₂ gas or a mixed gas in which O₂ gas and another gas are mixed to produce singlet excited oxygen,
the high-frequency discharge excited oxygen generating method for iodine lasers further comprising the step of injecting NO₂ gas inside the anode (4).

12. A high-frequency discharge excited oxygen generating method for iodine lasers **characterized by** comprising the steps of: supplying a high-frequency power between a hollow cathode (2) with a plasma channel (3) opened and an anode (4) insulated from the hollow cathode (2) and disposed on an exhaust side of the plasma channel (3) penetrating the hollow cathode (2); and supplying the plasma channel (3) of the hollow cathode (2) with O₂ gas or a mixed gas in which O₂ gas and another gas are mixed to produce singlet excited oxygen,
the high-frequency discharge excited oxygen generating method for iodine lasers further comprising the step of injecting an inert cooling gas inside the anode (4) to cool a plasma jet (8).

13. A high-frequency discharge excited oxygen generating method for iodine lasers **characterized by** comprising the steps of: supplying a high-frequency power between a hollow cathode (2) with a plasma channel (3) opened and an anode (4) insulated from the hollow cathode (2) and disposed on an exhaust side of the plasma channel (3) penetrating the hollow cathode (2); and supplying the plasma channel (3) of the hollow cathode (2) with O₂ gas or a mixed gas in which O₂ gas and another gas are mixed to produce singlet excited oxygen,
the high-frequency discharge excited oxygen generating method for iodine lasers further **characterized by** comprising the step of applying a magnetic field in a direction of a plasma jet (8) produced inside the anode (4).
